# EUROPEAN PATENT APPLICATION

(11) **EP 1 564 050 A1**
(43) Date of publication of application: **17.08.2005**
(21) Application number: 03798420.0
(22) Date of filing: 22.09.2003
(51) Int. Cl.: B60J 5/00, B62D 25/04

(54) **BELT LINE PART STRUCTURE OF CAR**

(30) Priority: 24.09.2002 JP 2002277159; 25.09.2002 JP 2002279631; 25.09.2002 JP 2002279632; 26.09.2002 JP 2002280630
(71) Applicant: Daihatsu Motor Co., Ltd., Ikeda-shi, Osaka 563-8651 (JP)
(72) Inventor: HAMAOKA, Yoshinori DAIHATSU MOTOR CO., LTD., Ikeda-shi, Osaka 563-0045 (JP); TAKADA, Aki DAIHATSU MOTOR CO., LTD., Ikeda-shi, Osaka 563-0045 (JP); IKEDA, Nobuyuki DAIHATSU MOTOR CO., LTD., Ikeda-shi, Osaka 563-0045 (JP); TAMAKI, Yoshimi DAIHATSU MOTOR CO., LTD., Ikeda-shi, Osaka 563-0045 (JP); WATANABE, Taketsugu DAIHATSU MOTOR CO., LTD., Ikeda-shi, Osaka 563-0045 (JP); KURAMOTO, Yoshinao DAIHATSU MOTOR CO., LTD., Ikeda-shi, Osaka 563-0045 (JP); FUJIWARA, Haruhiko DAIHATSU MOTOR CO., LTD., Ikeda-shi, Osaka 563-0045 (JP); KOYAISHI, Kaoru DAIHATSU MOTOR CO., LTD., Ikeda-shi, Osaka 563-0045 (JP)
(74) Representative: Kirschner, Klaus Dieter
(86) International application number: PCT/JP2003/011958
(87) International publication number: WO 2004/028842

(57) **Abstract**

A structure of a vehicle beltline section of which door body 15 is disposed to a front pillar 3 such that the front vertical wall 15d of the door body 15 and the rear end wall 3d of the front pillar 3 overlap with each other, and a beltline reinforcement 20 is disposed in the door body 15 to face the rear vertical wall 3d, in which a bulge 15e protruding to the pillar side and the vehicle inner side is formed at the vehicle inner side corner portion of the front vertical wall 15d of the door body 15.

## Description

### Technical Field

The present invention relates to a structure of a vehicle beltline section designed to transmit a force inputted at the time of a vehicle crash to a vehicle rear body via a pillar member and a beltline reinforcement disposed inside a door body.

### Background Art

In an attempt to prevent a door opening from being deformed when the vehicle clashes, a vehicle is generally structured to have a beltline reinforcement in a door body thereof to improve rigidity of the door.

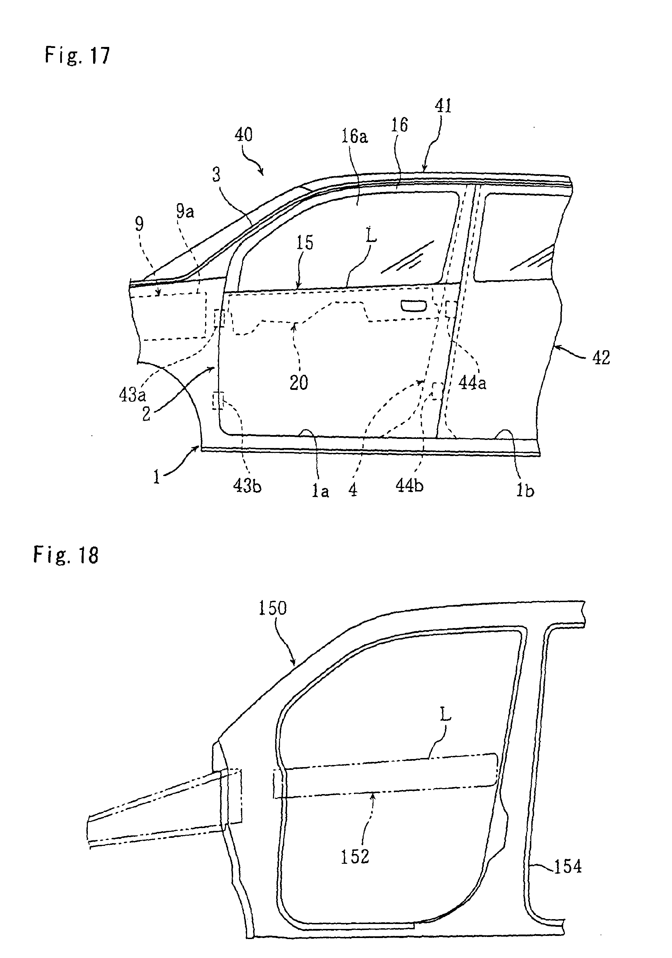

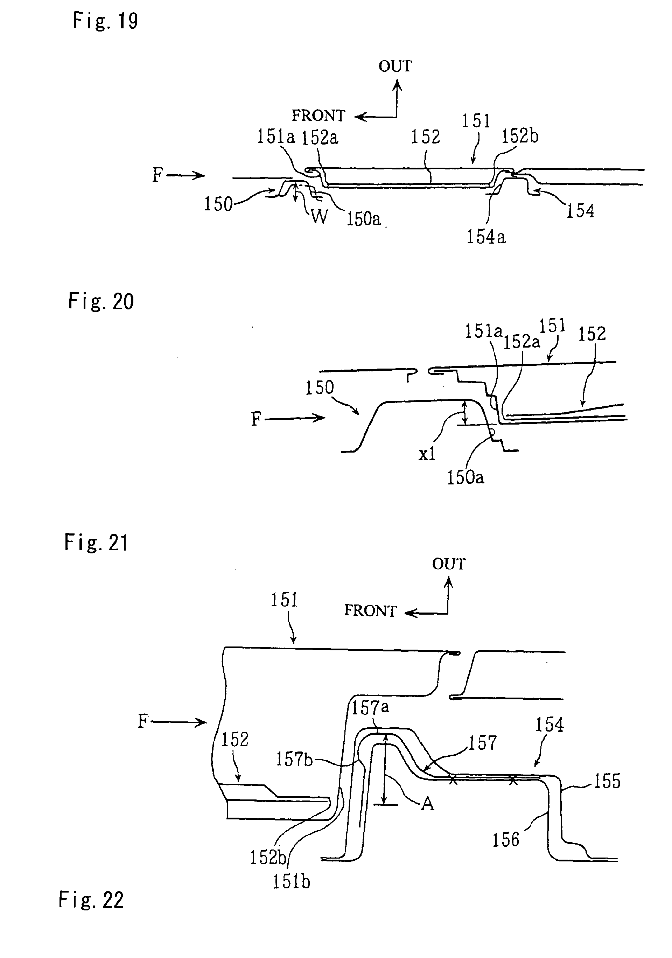

As a structure of such a beltline section, conventionally, as shown in FIGS. 18 to 20, there is one in which a front door 151 is disposed between a front pillar 150 and a center pillar 154 such that a front vertical wall 151a of the front door 151 and a rear vertical wall 150a of the front pillar 150 overlap with each other in a vehicle longitudinal direction with a predetermined lapping margin x1 therebetween. Further, a beltline reinforcement 152 extending in the longitudinal direction along a beltline L is disposed in the front door 151 such that a front end surface 152a of the beltline reinforcement 152 faces a rear vertical wall 150a of the front pillar 150 and a rear end surface 152b of the beltline reinforcement 152 faces a front vertical wall 154a of the center pillar 150 (refer to, for example, Japanese Patent Application Laid-Open No. Hei9-175179, Japanese Patent Application Laid-Open No. Hei8-197952, and Japanese Utility Model Application Laid-Open No. Hei4-89418).

Then, at the time of the vehicle clash, the beltline reinforcement 152 functions as a support between the front and center pillars 150, 154 to thereby release an impact force F to the vehicle rear body, so that the door opening is prevented from being deformed.

Meanwhile, the present applicant previously proposed a structure of a beltline section shown in FIGS. 21 and 22 (Japanese Patent Application No. Hei2001-311188). This is the structure of the beltline section, in which a patch member 157 having bulges protruding to the vehicle outer side 157a and to the door side 157b are disposed between a pillar outer 155 and a pillar reinforcement 156 of the center pillar 154, and the patch member 157 is jointed in a vehicle lateral direction on the outer wall of the pillar reinforcement 156 by spot welding (see marks x) so that the patch member 157 faces the rear end surface 152b of the beltline reinforcement 152 disposed in the front door.

According to the above-described structure, the bulge 157a at the vehicle outer side allows an increase in a lapping amount A between the front door 151 and the center pillar 154, so that the inputted force F at the time of a vehicle clash can be transmitted into the center pillar 154 effectively. Further, the beltline reinforcement 152 engages with the bulge 157b at the door side to thereby prevent the front door 151 from moving to the vehicle outer side, so that the inputted force F can surely be transmitted into the center pillar 154 also from this point of view.

However, in the above-described conventional structure of the door beltline section, there are problems as will be described below.

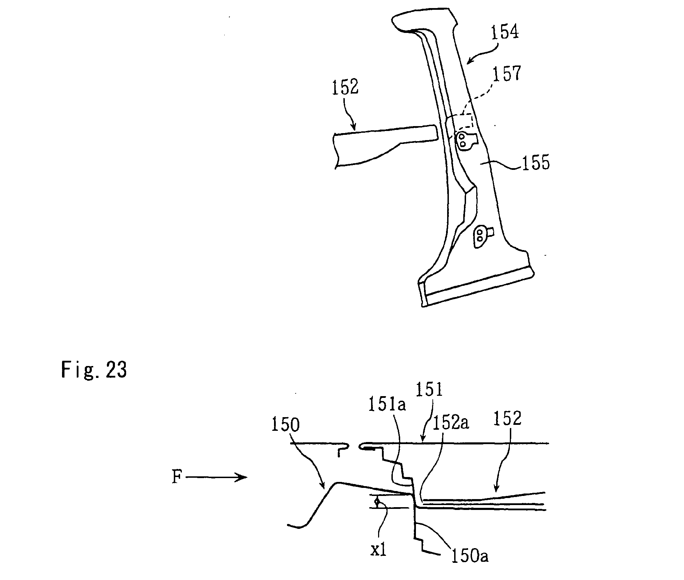

First, as shown in FIG. 23, when the front pillar 150 is turned by torsion, a lapping margin xl in the vehicle lateral direction of the front pillar 150 and the front door 150 reduces and the beltline reinforcement 152 does not engage with the door-side bulge 157b sufficiently to possibly push the front door 151 to the vehicle outer side. As a result, there arises a concern that the impact force F is not transmitted into the beltline reinforcement 152 effectively.

Here, for ensuring that the beltline reinforcement engages with the door-side bulge 15b, it is conceivable that a space between a door-side front vertical wall 151a and a pillar-side rear vertical wall 150a is reduced as much as possible to reduce the time required for the engagement, or a lapping margin x in the vehicle lateral direction of the both is increased. However, a space in which a sealant sealing the door opening is disposed is needed between the front vertical wall and the rear vertical wall, there is therefore a limitation on the reduction of the space. Also, when the lapping margin is increased, the protrusion of the door body to the vehicle inner side increases to that extent, causing another problem of reducing an interior space.

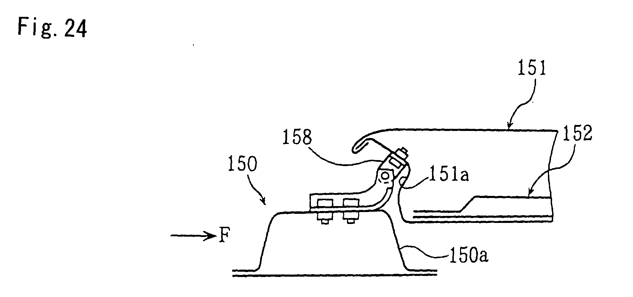

Second, in the above-described conventional beltline structure, as shown in FIG. 24, there is a case where the front vertical wall 151a of the front door 151 is deformed at the time of a vehicle crash to thereby rotate a door-side hinge member 158 to the vehicle outer side and thereby the front door 151 is pushed out to the vehicle outer side, therefore the impact force F cannot be transmitted into the beltline reinforcement 152 surely.

Third, in the above-described structure of the beltline section, in the case for example of the front pillar 150 having a limitation on the section width w thereof in the vehicle lateral direction, when the front pillar 150 is deformed by torsion (refer to the chain double-dashed line in FIG. 18), the beltline reinforcement 152 is removed from the front pillar 150 at the time of the vehicle crash to thereby push the front door 151 to the vehicle outer side, raising a concern that the impact force F cannot be transmitted into the beltline reinforcement 152 surely.

Fourth, as described above, when the structure having the patch member jointed by spot welding to the pillar reinforcement is employed, the jointed portions by spot welding of the patch member and the pillar reinforcement are to be in the direction of being removed, raising a concern that the patch member is deformed to the vehicle outer side depending on the level of the impact force.

The present invention has been made in view of the above-described conventional situations, and an object thereof is to provide a structure of a vehicle beltline section capable of preventing a front door from moving to the vehicle outer side when the vehicle crashes, and capable of transmitting an impact force into a beltline reinforcement surely.

### Disclosure of the Invention

The invention described in claim 1 is characterized in that, in a structure of a vehicle beltline section composed of a pillar member extending in a vehicle vertical direction; a door body whose door-side vertical wall facing the pillar member is disposed to overlap such a pillar-side vertical wall of the pillar member that faces the door body when viewing from a vehicle longitudinal direction; and a beltline reinforcement disposed in the door body to face the pillar-side vertical wall, a bulge protruding to a pillar side and a vehicle inner side is formed at a vehicle inner side corner of the door-side vertical wall of the door body.

The invention described in claim 2 is characterized in that, in claim 1, a tip portion of the beltline reinforcement is inserted into and disposed in the bulge at the pillar side.

The invention described in claim 3 is characterized in that, in a structure of a vehicle beltline section composed of a pillar member extending in a vehicle vertical direction; a door body whose door-side vertical wall facing the pillar member is disposed to overlap such a pillar-side vertical wall of the pillar member that faces the door body when viewing from a vehicle longitudinal direction; and a beltline reinforcement disposed in the door body to face the pillar-side vertical wall, the beltline reinforcement is formed by jointing an outer reinforcement and an inner reinforcement, and a tip of the inner reinforcement protrudes to the pillar side from a tip of the outer reinforcement.

The invention described in claim 4 is characterized in that, in a structure of a vehicle beltline section composed of a pillar member extending in a vehicle vertical direction; a door body whose door-side vertical wall facing the pillar member is disposed to overlap such a pillar-side vertical wall of the pillar member that faces the door body when viewing from a vehicle longitudinal direction; and a beltline reinforcement disposed in the door body to face the pillar-side vertical wall, a bulge protruding to a pillar side and a vehicle inner side is formed at a vehicle inner side corner of the door-side vertical wall of the door body, the beltline reinforcement is formed by jointing an outer reinforcement and an inner reinforcement by welding, and a tip of the inner reinforcement protrudes to the pillar side from a tip of the outer reinforcement.

The invention described in claim 5 is characterized in that, in a structure of a vehicle beltline section composed of a pillar member extending in a vehicle vertical direction; a door member whose front vertical wall is disposed such that a vehicle inner portion of the front vertical wall overlaps a rear side wall of the pillar member when viewing from a vehicle longitudinal direction; a beltline reinforcement disposed in the door body to face the rear side wall; a pillar-side hinge portion secured to an outer side wall of the pillar member; and a door-side hinge portion secured to the front vertical wall of the door body and coupled with the pillar-side hinge portion via a hinge pin in a rotatable manner, the door-side hinge portion is secured to the front vertical wall by having a reinforcing board between the door-side hinge portion and the front vertical wall, and the reinforcing board is formed to extend along the front vertical wall to a vehicle inner side to come close to the beltline reinforcement.

The invention described in claim 6 is characterized in that, in a structure of a vehicle beltline section composed of front and rear pillar members; a door body disposed between the front pillar member and the rear pillar member; a beltline reinforcement extending along a beltline in a vehicle longitudinal direction and disposed in the door body such that a font end portion of the beltline reinforcement faces the front pillar member and a rear end portion of the beltline reinforcement faces the rear pillar member, an end surface protrusion protruding from other end surface portion to come closer to a pillar side is formed on such an end surface of the beltline reinforcement that faces a portion of the pillar member having a section width wider than the section width of other portions of the pillar member.

The invention described in claim 7 is characterized in that, in claim 6, the end surface protrusion coming close to the pillar side is formed disproportionately upward or downward from the belt line.

The invention described in claim 8 is characterized in that, in claim 6 and claim 7, a flange portion extended in a vehicle lateral direction is provided at a portion of the beltline reinforcement opposed to the end surface protrusion of the beltline reinforcement.

The invention described in claim 9 is characterized in that, in a structure of a vehicle beltline section composed of a front door; a beltline reinforcement extending in a vehicle longitudinal direction and disposed in the front door; a center pillar disposed at a rear of the front door to face a rear end surface of the beltline reinforcement; and a door hinge member of a rear door is disposed on an outer wall of a pillar outer of the center pillar, a pillar reinforcement formed to be in accordance with the pillar outer is disposed inside the pillar outer, a patch member having at least a front wall portion and an outer wall portion is disposed between the pillar reinforcement and the pillar outer, a bulge preventing a door body from moving to a vehicle outer side at a time a vehicle clash by being engaged with the beltline reinforcement is formed on a front wall portion of the patch member, and the outer wall portion together with the door hinge member is secured to the pillar reinforcement and the pillar outer by bolting all together.

The invention described in claim 10 is characterized in that, in claim 9, a rear end lower portion of the beltline reinforcement is formed to extend downward and the extension is made to face the patch member and the door hinge member.

### Brief Description of Drawings

FIG. 1 is a side view of a side panel to illustrate a structure of a vehicle beltline section according to one embodiment (first embodiment) of the invention in claims 1 to 4 and claims 6 to 8;
FIG. 2 is a sectional plan view (taken along II-II line in FIG. 1 and) showing a door beltline section of a front pillar according to the present embodiment;
FIG. 3 is a sectional plan view (taken along III-III line in FIG. 1 and) showing a door beltline section of a center pillar according to the present embodiment;
FIG. 4 is a sectional view (taken along the v-Iv line in FIG. 1 and) showing a beltline reinforcement of the front door;
FIG. 5 is a sectional view (taken along the V-V line in FIG. 1 and) showing the beltline reinforcement of the front door;
FIG. 6 is a sectional view (taken along the VI-VI line in FIG. 1 and) showing the beltline reinforcement of the front door;
FIG. 7 is a sectional view (taken along the VII-VII line in FIG. 1 and) showing the beltline reinforcement of the front door;
FIG. 8 is a sectional view showing procedures of assembling the beltline reinforcement;
FIG. 9 is a view showing a section width in the lateral direction of the front pillar;
FIG. 10 is a view showing a section width in the lateral direction of the center pillar;
FIG. 11 is a side view of a side panel for illustrating a structure of a vehicle beltline section according to one embodiment (second embodiment) of the invention in claims 5, 9, and 10;
FIG. 12 is a sectional plan view (taken along the XII-XII line in FIG. 11 and) showing a beltline section of a front pillar;
FIG. 13 is a sectional plan view (taken along the XIII-XIII line in FIG. 11 and) showing the beltline section of the front pillar;
FIG. 14 is a sectional plan view (taken along the XIV- XIV line in FIG. 11 and) showing the beltline section of the front pillar;
FIG. 15 is a sectional plan view (taken along the XV-XV line in FIG. 11 and) showing a beltline section of a center pillar;
FIG. 16 is a side view of the center pillar;
FIG. 17 is a side view of the vehicle;
FIG. 18 is a view illustrating a structure of a conventional beltline section;
FIG. 19 is a view illustrating a structure of a conventional beltline section;
FIG. 20 is a view illustrating a structure of a conventional beltline section around a front pillar;
FIG. 21 is a schematic view of a beltline section to illustrate a formation process of the present invention;
FIG. 22 is a perspective view of the beltline section;
FIG. 23 is a view to illustrate a conventional problem; and
FIG. 24 is a view to illustrate a conventional problem.

### Best Mode for Carrying out the Invention

Hereinafter, embodiments according to the present invention will be described based on the attached drawings.

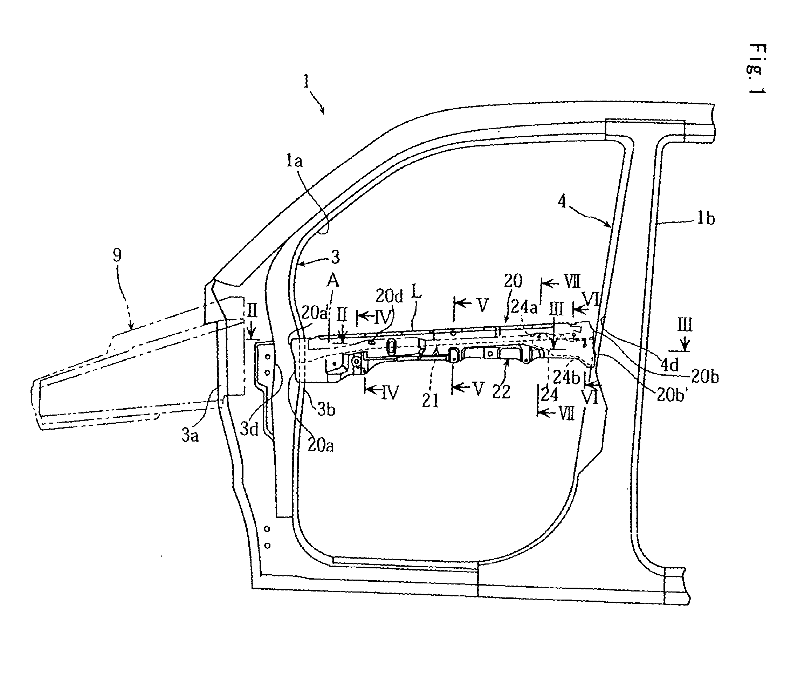

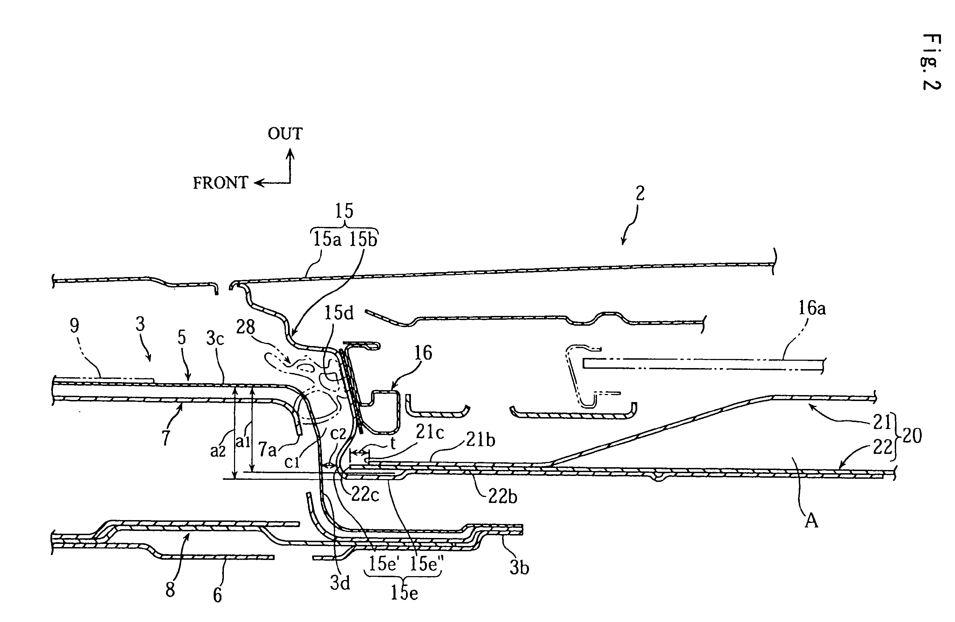

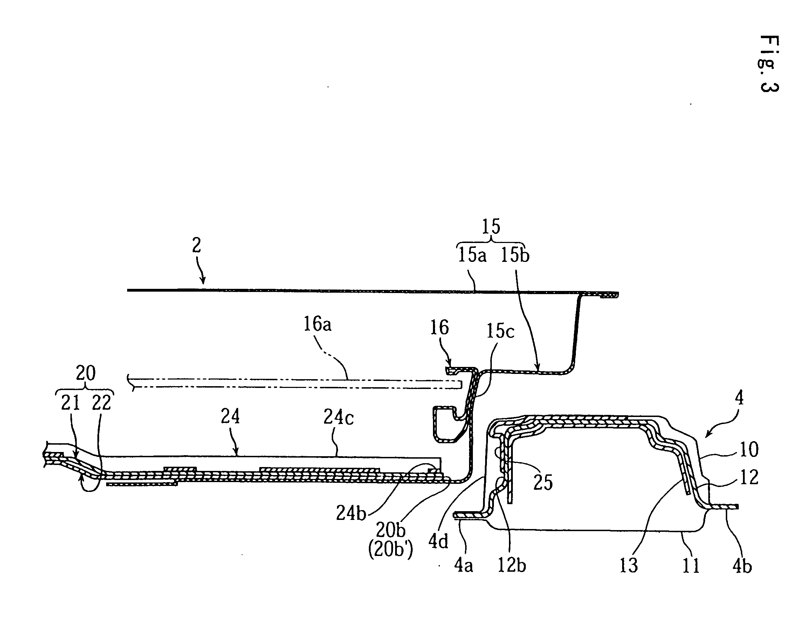

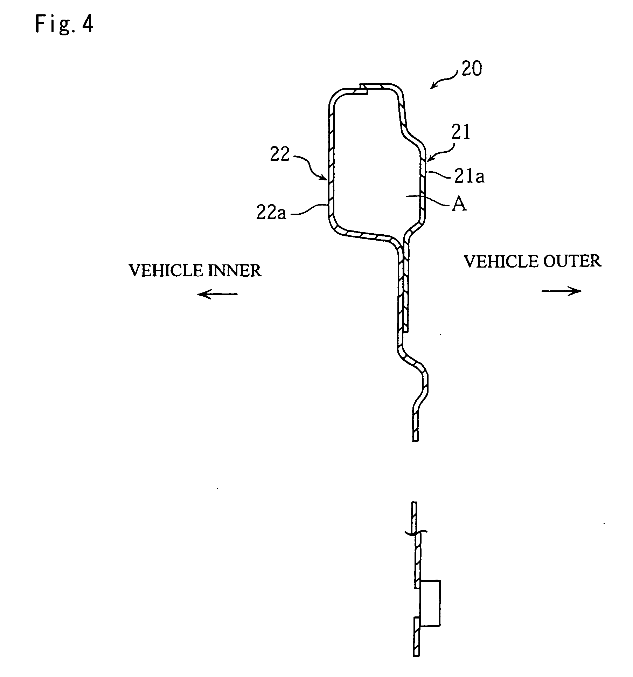

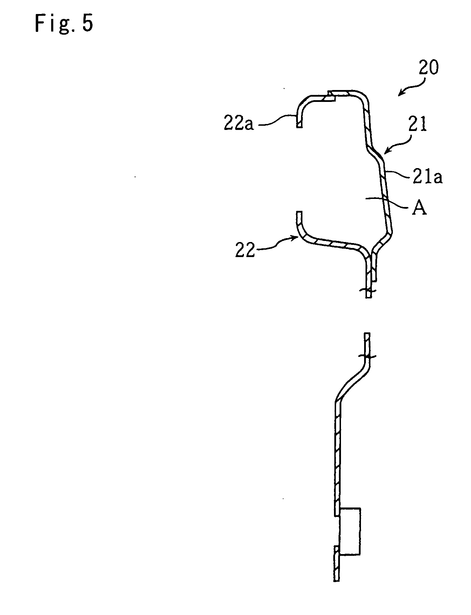

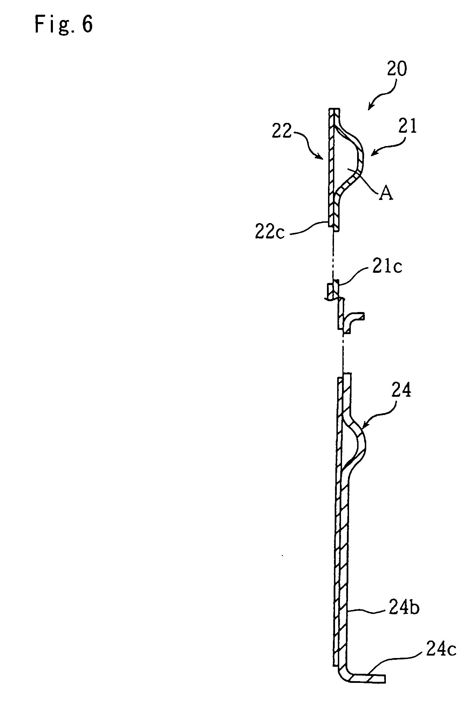

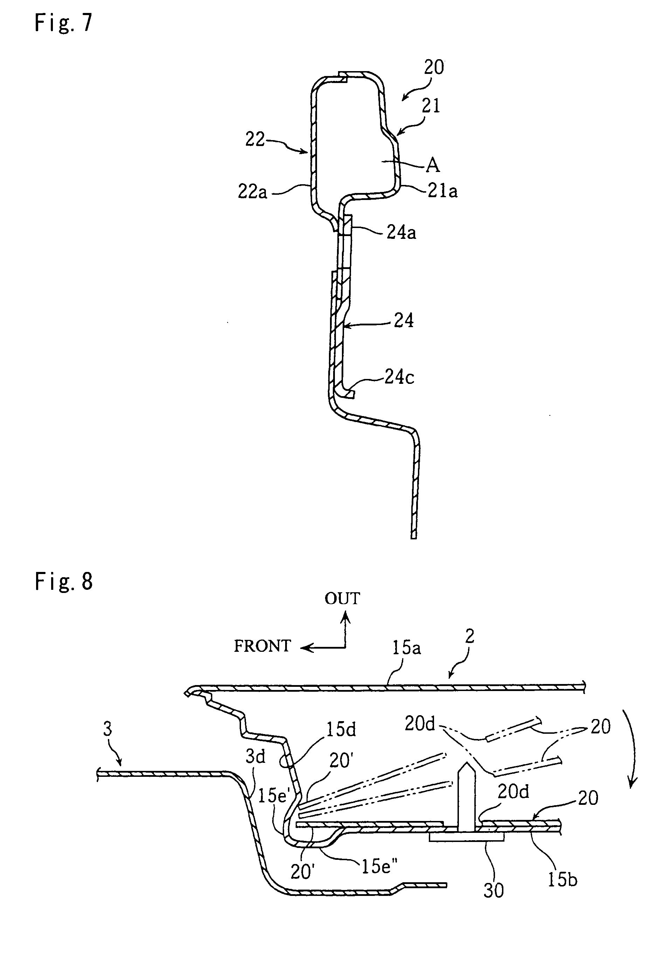

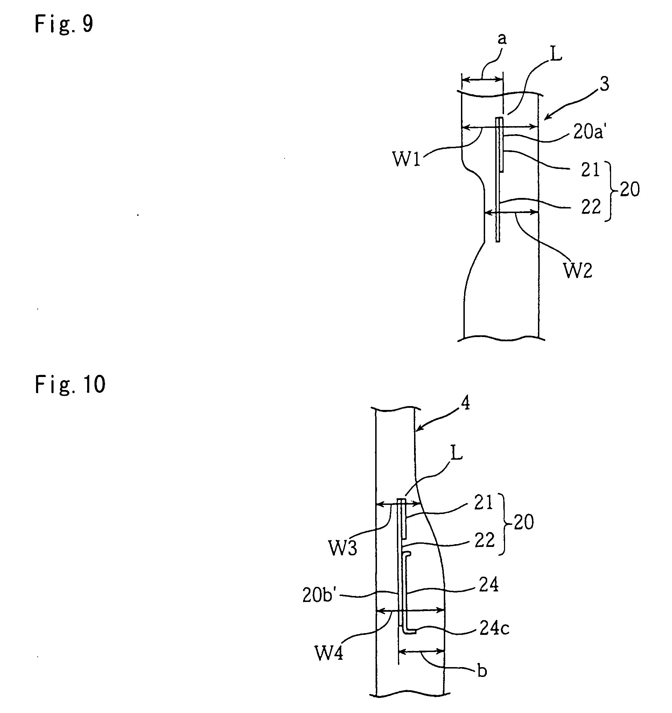

FIGS. 1 to 10 are views to illustrate the structure of a beltline section of a vehicle according to one embodiment (first embodiment) of the invention in claims 1 to 4 and claims 6 to 8, in which FIG. 1 is a side view showing a side panel in a state of having a beltline reinforcement disposed therein, FIG. 2 is a sectional plan view (a sectional view taken along the II-II line in FIG. 1) of a door beltline section of a front pillar, FIG. 3 is a sectional plan view (a sectional view taken along the III-III line in FIG. 1) of a door beltline section of a center pillar, FIGS. 4, 5, 6, and 7 are sectional views of a beltline reinforcement (sectional views taken along the IV-IV line, V-V line, VI-VI line, and VII-VII line in FIG. 1) respectively, FIG. 8 is a sectional view showing a state when a beltline reinforcement is assembled, and FIGS. 9 and 10 are views showing a positional relationship of a beltline reinforcement and a pillar when viewing in the vehicle longitudinal direction.

In the drawings, "1" denotes a side panel composing a vehicle side section, the side panel 1 includes a wide front door opening 1a and a rear door opening 1b formed therein, and a front door 2 and a rear door (not shown) are formed in the front door opening 1a and the rear door opening 1b, respectively. The front end portion of the front door 2 is supported in an openable and closable manner via a pair of upper and lower door hinge members (not shown) disposed at a front pillar 3 forming the front edge portion of the front door opening 1a of the side panel 1. Further, the rear end portion of the front door 2 is supported in a lockable manner by a door lock mechanism disposed at a center pillar 4 forming the rear edge portion of the front door opening 1a.

The front pillar 3 includes, between a pillar outer 5 having almost a hat-shaped transverse section and a pillar inner 6, a pillar outer reinforcement 7 having a hat-shaped transverse section and disposed almost along with the pillar outer 5 and a pillar inner reinforcement 8 disposed almost along with the pillar inner 6, in which the front edge portion 3a and the rear edge portions 3b of these are jointed with each other by spot welding, so that the front pillar 3 is structured to have a closed section in a rectangular column shape extending in the vertical direction.

The rear end portion of an apron member 9 extending frontward of the vehicle is coupled to an outer wall 3c of the front pillar 3. The apron member 9 is disposed on the same height as of a beltline L when viewing from the vehicle side.

The center pillar 4 includes, between a pillar outer 10 having almost a hat-shaped transverse section and a pillar inner 11, a pillar outer reinforcement 12 having a hat-shaped transverse section and a pillar inner reinforcement 13 having a horseshoe-shaped transverse section, in which the front edge portion 4a and the rear edge portion 4b of these are jointed with each other by spot welding, so that the center pillar 4 is structured to have a closed section in the rectangular column shape extending in the vertical direction.

The front door 2 is structured to have a door body 15 composed of a door outer 15a and a door inner 15b, which are coupled by hemming, a window frame 16 connected thereto, and a door glass 16a opening and closing the window opening of the window flame 16 and accommodated and disposed in the door body 15 in a hoistable and lowerable manner.

In the door body 15, there is disposed a beltline reinforcement 20 extending along the beltline L in the longitudinal direction of the vehicle. The beltline reinforcement 20 is composed of an outer reinforcement 21 and an inner reinforcement 22 jointed with each other by welding, and is jointed to the door inner 15b by welding.

The inner reinforcement 22 is designed to have a vertical length larger than that of the outer reinforcement 21, and the lower portion of the inner reinforcement 22a is also used as a part of the door inner 15b.

In the upper edge portion of the inner reinforcement 22, a convex portion 22a protruding to the inner side of the vehicle is formed by bending, the convex portion 22a together with an upper portion 21a of the outer reinforcement 21 forms a box-shaped closed section A extending in the vehicle longitudinal direction. The front end portion and rear end portion of the box-shaped closed section A are pointed. Further, the front end portion 21b and the front end portion 22b of the outer reinforcement 21 and the inner reinforcement 22, respectively, are formed to be tabular and jointed with each other by welding while abutting on each other. Also, the rear end portion of the beltline reinforcement 20 has the same structure as of the front end portion thereof. Since there are formed the box-shaped closed section A extending over substantially the same length as of the beltline reinforcement 20 at the upper edge portion of the beltline reinforcement 20, and the tabular portions at the front and rear end portions thereof, therefore, the section of the beltline portion can be prevented from being broken by an inputted force at the time of a vehicle crash, and an impact force can be transmitted into the beltline reinforcement 20 effectively.

When viewing from the vehicle side, the beltline reinforcement 20 and the apron member 9 are disposed at positions of substantially the same height, and are running so as to form almost a straight line in the vehicle longitudinal direction. With such a structure of disposition, the inputted force at the time of the vehicle crash is transmitted from the apron member 9 into the beltline reinforcement 20 via front pillar 3, and from the beltline reinforcement 20 into the vehicle rear body via the center pillar 4.

When viewing in the vehicle longitudinal direction, a rear vertical wall 15c of the door inner 15b is disposed with its vehicle inner side portion overlapping a front vertical wall 4d of the center pillar 4 by having a predetermined space therebetween, while a rear end surface 20b of the beltline reinforcement 20 faces the inside end portion of the front vertical wall 4d.

Further, a patch member 25 protruding to the door inner 15b side is jointed by welding with a front vertical wall 12b of the pillar outer reinforcement 12 of the center pillar 4, and the patch member 25 is disposed disproportionately at a vehicle outer side from the rear end surface 20b of the beltline reinforcement 20. When a vehicle crash forces the front door 2 to move rearward, then the beltline reinforcement 20 engages with the patch member 25 to thereby block the front door 2 from moving to the vehicle outer side.

When viewing in the vehicle longitudinal direction, a front vertical wall (vertical wall at the door side) 15d of the door inner 15b, which faces the front pillar 3, is disposed so as to overlap a rear vertical wall (vertical wall at the pillar side) 3d of the front pillar 3, which faces the front door 2, by having a predetermined space c1 therebetween. The front vertical wall 15d is provided with a sealant 28 attached thereto that abuts to the rear vertical wall 3d by elastically changing its shape to thereby blockade the space c1.

A front end surface 20a of the beltline reinforcement 20 faces the inside end portion of the rear vertical wall 3d. Further, a release hole 7a of a size allowing the beltline reinforcement 20 to be inserted therethrough is provided at a portion of the pillar outer reinforcement 7 in front of the front end surface 20a of the beltline reinforcement 20. When the vehicle crashes, the beltline reinforcement 20 is inserted through the release hole 7a to thereby prevent the front pillar 3 from being deformed by torsion and also the inputted force can surely be transmitted into the beltline reinforcement 20.

At an inside corner portion of the front vertical wall 15d of the door inner 15b, there is provided a bulge 15e protruding at the front pillar 3 side and the vehicle inner side. The vertical size of the bulge 15e is designed to be slightly larger than the vertical size of the front end surface 20a of the beltline reinforcement 20. Therefore, a space c2 between a bulge 15e' at the pillar side and the rear vertical wall 3d of the front pillar 3 is smaller than a space c1 between the rear vertical wall 3d and the front vertical wall 15d. Further, a lapping amount a2 of the bulge 15e" at the vehicle inner side and the front pillar 3 is larger than a lapping amount a1 of the door inner 15b and the front pillar 3.

A front end surface 22c of the inner reinforcement 22 protrudes frontward by "t" from a front end surface 21 c of the outer reinforcement 21. In other words, the front end surface 21 c of the outer reinforcement 21 is structured to retreat rearward by "t" from the front end surface 22c of the inner reinforcement 22.

Further, the front end surface 22c of the inner reinforcement 22 is disposed in the pillar-side bulge 15e', so that it is inserted into and is positioned in the vicinity of the inside surface of the pillar-side bulge 15e'.

The beltline reinforcement 20 is provided with a front reference hole 20d and a rear reference hole 20e for positioning when assembled. The front reference hole 20 is in an oval shape extending in the longitudinal direction so as only to prevent the vertical movement of the beltline reinforcement 20, while the rear reference hole 20e is in a perfect circle so as to prevent both the longitudinal movement as well as the vertical movement.

In order to assemble the beltline reinforcement 20, as shown in FIG. 8, first, reference pins 30 are attached to the portions of the door inner 15b corresponding to the respective reference holes 20d, 20e, and the beltline reinforcement 20 is inserted from the rearward in a slanting manner into the inside with its front end portion 20' being inserted into the pillar-side bulge 15e'. In this state, the beltline reinforcement 20 is rotated in the direction of the arrow inward so as to insert the front reference pin 30 into the front reference hole 20d and the rear reference pin (not shown) into the rear reference hole 20e. Thus, the beltline reinforcement 20 is positioned and held at the door inner 15b with its front end portion 20' being still inserted into the pillar-side bulge 15e', then the beltline reinforcement 20 is jointed with the door inner 15b by welding, and the reference pins 30 are pulled out.

Thus, the front reference hole 20d of the beltline reinforcement 20 is shaped into the oval extending in the longitudinal direction, so that it is easily possible to insert the front end portion 20' of the beltline reinforcement 20 into the pillar-side bulge 15e'. In other words, when fitting the beltline reinforcement into the front and rear reference pins 30 all together, it is difficult to insert the front end portion 20' of he beltline reinforcement 20 into the door-side bulge 15e'.

When viewing in the 1 vehicle longitudinal direction, a beltline portion L at the front pillar 3, to which the front end surface 20a of the beltline reinforcement 20 faces, has a section width w1 in the vehicle lateral direction larger than a section width w2 of a door hinge portion below the beltline portion L (refer to FIG. 9). With respect to a section width w3 of the beltline portion L at the center pillar 4, to which the rear end surface 20b of the beltline reinforcement 20 faces, a section width w4 therebelow is formed to have a wider width (refer to FIG. 10). These section widths w1 to w4 are set in view of design or structural requirements of the vehicle.

On the front end surface 20a of the beltline reinforcement 20, which faces the portion of the front pillar 3 having a section width w1 being larger than the section width w2, a front end surface protrusion 20a' protruding to come close to the front pillar side is formed in an unified manner. This front end surface protrusion 20a' is formed at the upper portion of the front end surface 20a and is at substantially the same height as of the closed section A in the box shape (refer to FIG. 1).

On the rear end surface 20b of the beltline reinforcement 20, which faces the portion of the front pillar 4 having a section width w4 being larger than the section width w3, a rear end surface protrusion 20b' protruding to come close to the center pillar side is formed in a unified manner. This rear end surface protrusion 20b' is formed disproportionately downward to below the beltline portion L, and a reinforcing board 24 made from a sheet metal is disposed between the rear end surface protrusion 20b' and the beltline portion L (refer to FIG. 1).

An upper edge portion 24a of the reinforcing board 24 is jointed by welding with the joint portion of the outer reinforcement 21 and the inner reinforcement 22 to overlap their joint portion, while a lower edge portion 24b is formed in accordance with the lower edge shape of the inner reinforcement 22. Further, a flange portion 24c extending outward in the vehicle lateral direction is formed by bending at the lower edge portion 24b of the reinforcing board 24.

Subsequently, the operation and effect of the present embodiment will be described.

According to the structure of the beltline section of the present embodiment, there is provided the bulge 15e protruding to the pillar side and the vehicle inner side at the vehicle inner side corner of the front vertical wall 15d of the door body 15, so that the lapping amount a2 with respect to the front pillar 3 can be increased with the bulge 15e" at the vehicle inner side, ensuring that the beltline reinforcement 20 bumps into and squashes the front pillar 3 even if the front pillar 3 is deformed by torsion. As a result, it is possible to prevent the front door 2 from being pushed out to the vehicle outer side, so that the impact force can be transmitted from the beltline reinforcement 20 into the vehicle rear body surely.

Further, the bulge 15e" at vehicle inner side serves as a bead for crash by being bucked and deformed when the vehicle crashes, thereby the beltline reinforcement 20 quickly bumps into and squashes the front pillar 3, so that the impact force can be transmitted into the vehicle rear body efficiently.

With the bulge 15' at the pillar side, the space c2 with respect to the rear vertical wall 3d of the front pillar 3 can be reduced, thereby the time necessary for the beltline reinforcement 20 to bump into and squash the front pillar 3 can be reduced to that extent, so that the door body 15 can be prevented from moving to the vehicle outer side even if the front pillar 3 is deformed by torsion.

Further, in the present embodiment, the bulge 15e is formed at the vehicle inner side corner of the front vertical wall 15d, thereby the space c1 for disposing the sealant 28 therein can be ensured and also the door body 15 can be prevented from protruding to the vehicle inner side, so that the vehicle interior space can be ensured.

In the present embodiment, the front end portion 20' of the beltline reinforcement 20 is disposed by being inserted into the bulge 15e' at the pillar side to come close to the inside surface of the bulge 15e', thereby the distance between the beltline reinforcement 20 and the front pillar 3 can be reduced further, so that the time necessary for the beltline reinforcement 20 to bump into and squash the front pillar 3 can be reduced further.

In the present embodiment, the beltline reinforcement 20 is formed by jointing by welding the outer reinforcement 21 and the inner reinforcement 22 to form the box-shaped closed section A, in which the front end surface 22c of the inner reinforcement 22 is designed to protrude from the front end surface 21c of the outer reinforcement 21 so as to position closer to the pillar side than the front end surface 21c, thereby the inner reinforcement 22 having a larger lapping margin in the vehicle lateral direction with respect to the front pillar 3 is forced to bump into and squash the front pillar 3 faster than the outer reinforcement 21, that is, the beltline reinforcement 20 surely bumps into and squashes the front pillar 3 even if the front pillar 3 is deformed by torsion, so that the door body 15 can be prevented from moving to the vehicle outer side.

The load at the time of the vehicle crash is transmitted from the apron member 9 into the beltline reinforcement 20 via the front pillar 3. In that case, the front end surface protrusion 20a' bumps into and squashes the front pillar 3 and, at the same time, the load is transmitted into the box-shaped closed section A portion. The rear end surface protrusion 20b' of the beltline reinforcement 20 bumps into and squashes the center pillar 4, and subsequently, the load transmitted into the box-shaped closed section A portion is transmitted into the center pillar 4 via the reinforcing board 24. Specifically, the rear end surface protrusion 20b' firstly bumping into the center pillar 4 and the closed section A portion transmitting the load are positioned disproportionately upward and downward, respectively, so that the load is to be transmitted via the reinforcing board 24 after the rear end surface protrusion 20b' bumps into and squashes the center pillar 4.

According to the structure of the beltline section of the present embodiment, the front end surface protrusion 20a' extending to the front pillar side to come close thereto is formed on the front end surface 20a of the beltline reinforcement 20 facing the portion of the front pillar 3 having the section width w1 wider than the section width w2, and the rear end surface protrusion 20b' extending to the center pillar side to come close thereto is formed on the rear end surface 20b of the beltline reinforcement 20 facing the portion of the center pillar 4 having the section width w4 wider than the section width w3, so that the front and rear end surface protrusions 20a', 20b' are to bump into the wider section widths w1, w4 of the front and center pillars 3, 4, first, respectively. With this, it is possible to ensure the required amount of lapping margins a, b, in the vehicle lateral direction with respect to the respective pillars 3, 4, so that the beltline reinforcement 20 can surely bumps into and squashes both the front and center pillars 3, 4 even if both the pillars are deformed by torsion. As a result, the front door 2 can be prevented from being pushed out to the vehicle outer side, and thereby the impact force can surely be transmitted from the beltline reinforcement 20 into the vehicle rear body.

In the present embodiment, the rear end surface protrusion 20b' is formed disproportionately to below the beltline portion L and the reinforcing board 24 is disposed between the rear end surface protrusion 20b' and the beltline portion L, so that the impact force can be transmitted from the beltline portion L into the rear end surface protrusion 20b' via the reinforcing board 24 even if the wider section width w4 of the center pillar 4 is positioned disproportionately below the beltline portion L, so that the rear end surface protrusion 20b' can bump into and squash the center pillar 4 surely.

In the present embodiment, the flange portion 24c extending outward in the vehicle lateral direction is formed at the lower edge portion 24b of the reinforcing board 24, thereby the rear end surface protrusion 20b' can be improved in rigidity, so that the rear end surface protrusion 20b' can bump into and squash the center pillar 4 more surely in the case where the rear end surface protrusion 20b' is formed disproportionately below the beltline portion L.

Further, in the case where it is impossible to joint by welding the rear end surface protrusion 20b' portion with the door body 15 in relation to a door sash 16, there arises a concern about lowering rigidity at the portion. In the present embodiment, the reinforcing board 24 is provided with the flange portion 24c, allowing flexural rigidity to increase at the time of the vehicle clash.

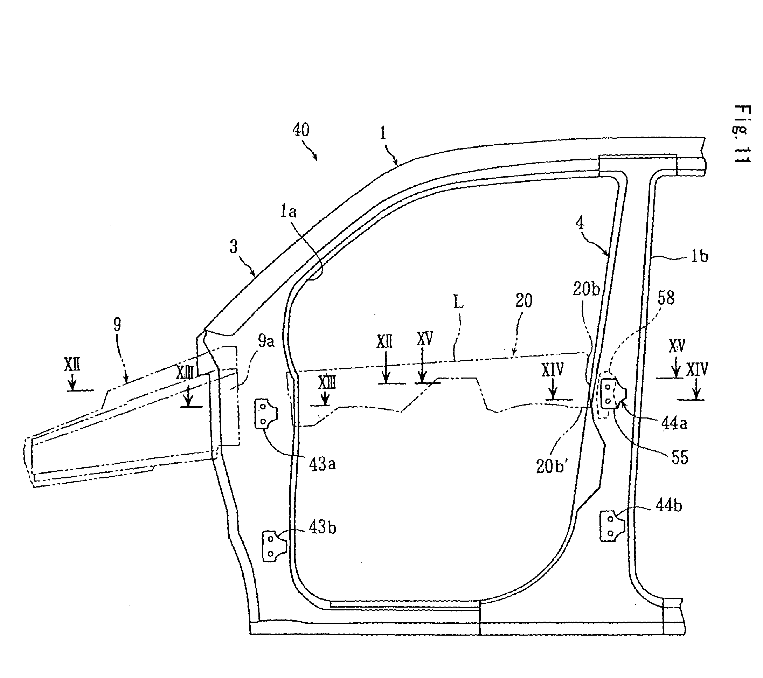

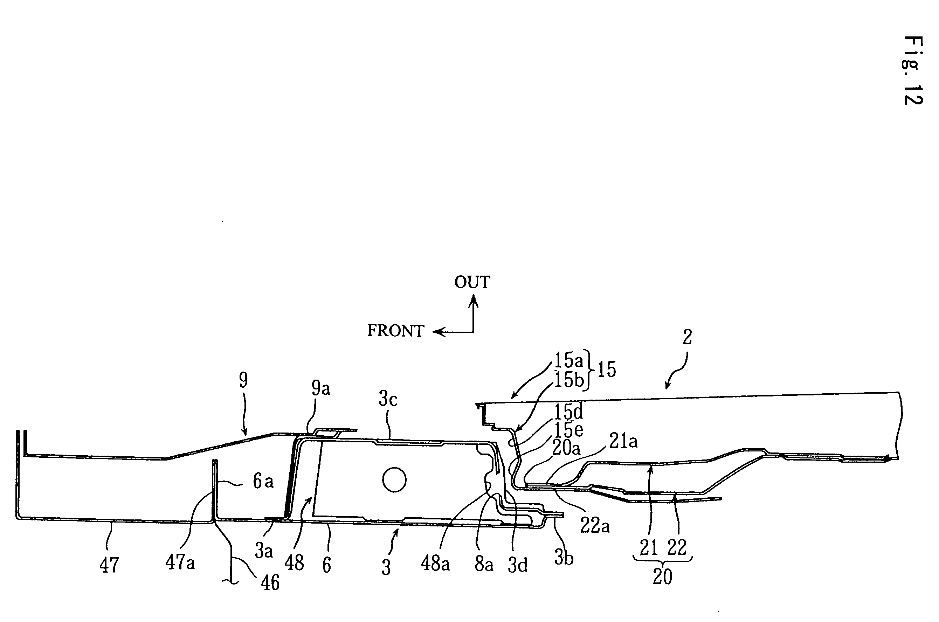

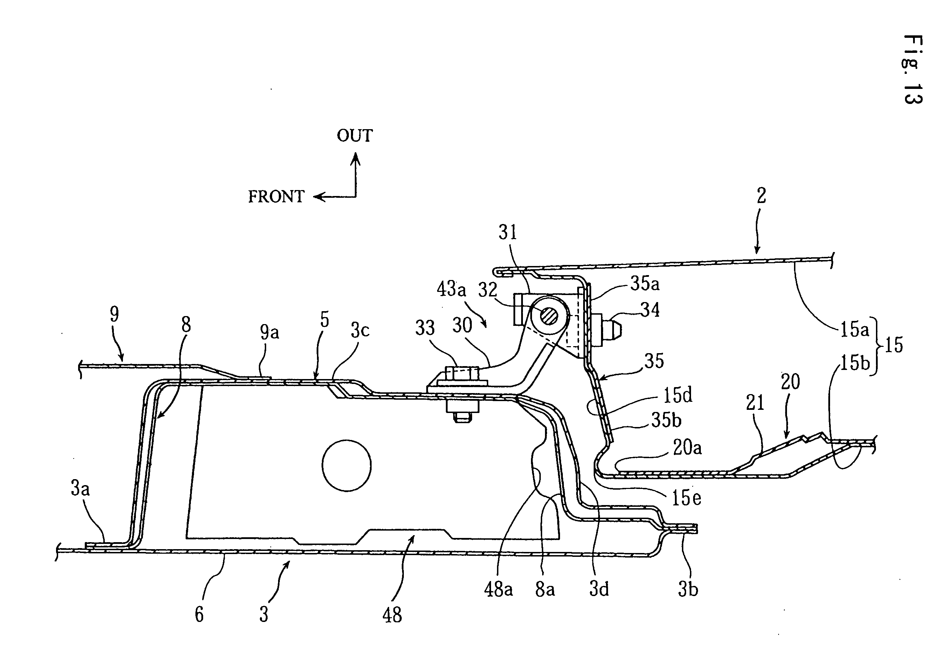

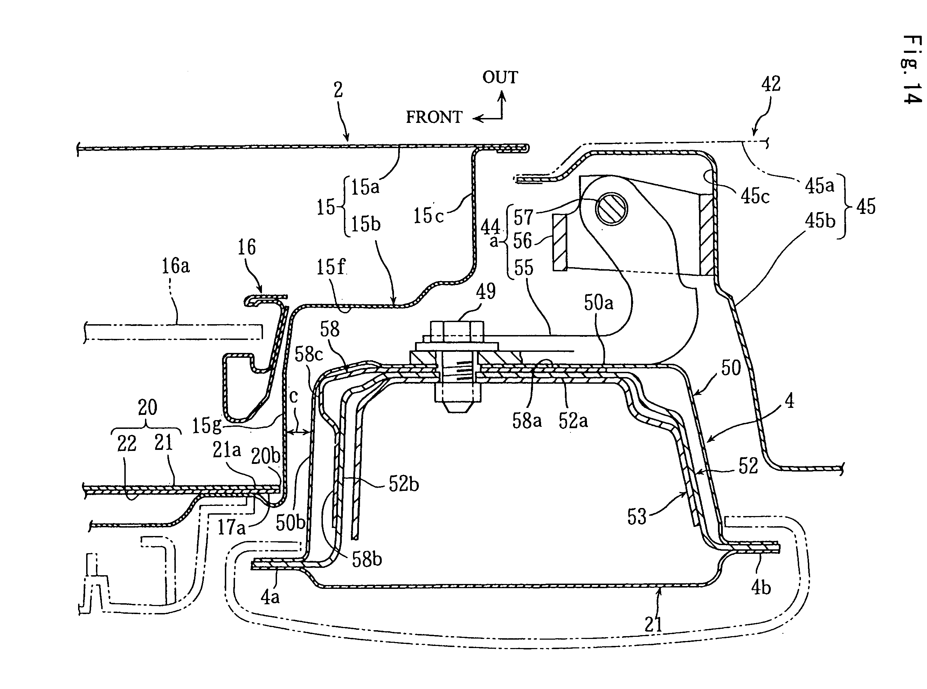

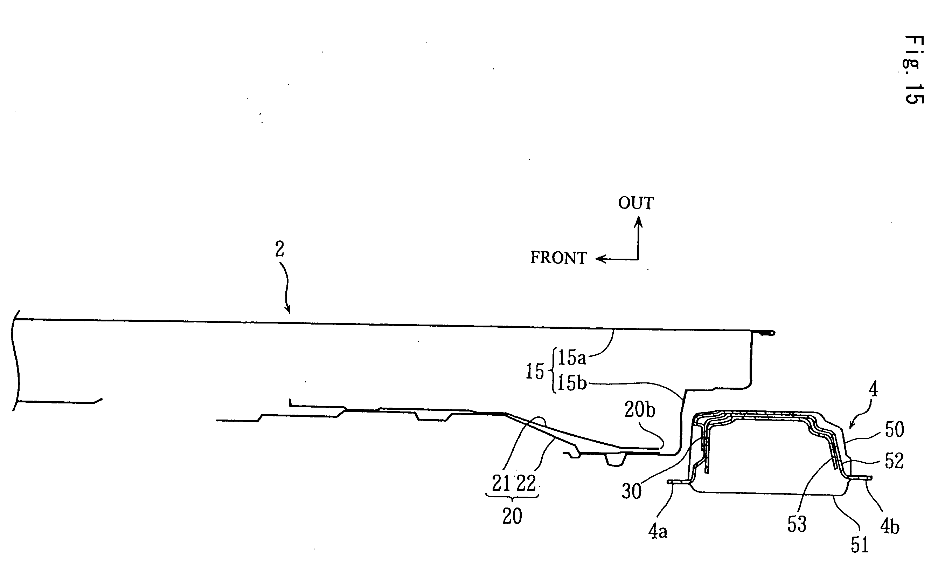

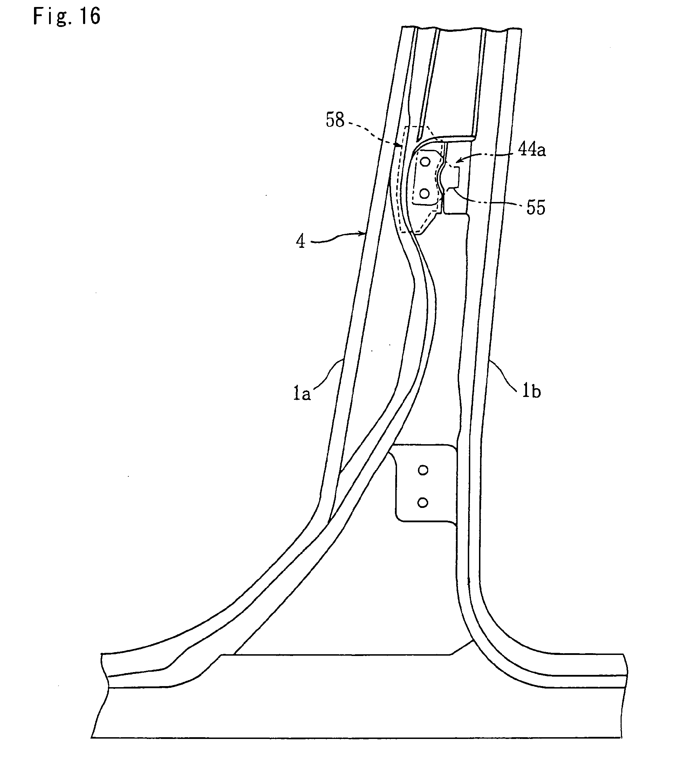

FIGS. 11 to 17 are views for illustrating a structure of a beltline section of a vehicle according to one embodiment (second embodiment) of the invention claimed in claims 5, 9, and 10, in which FIG. 11 is a side view of a side panel of the vehicle, FIGS. 12 and 13 are sectional plan views of the beltline section of a front pillar (the sectional views taken along the XII-XII and the XIII-XIII lines in FIG. 11, respectively), FIGS. 14 and 15 are sectional plan views of the beltline section of a center pillar (the sectional views taken along the XIV-XIV and the XV-XV lines in FIG. 11, respectively, FIG. 16 is a side view of the center pillar, and FIG. 17 is a side view of the vehicle side section. In the drawings, the same portions as of or corresponding to those in FIGS. 1 to 3 will be denoted by using the same reference numerals.

In the drawings, "40" denotes a vehicle side section, being the vehicle side body having, as a schematic structure, left and side panels 1, 1 together with a roof panel 41 disposed between their upper ends, and a floor panel (not shown) disposed between their lower edges to form a vehicle interior, in which a front door 2 and a rear door 42 are disposed in a front door opening 1a and a rear door opening 1b formed in the side panel 1, respectively.

The front door 2 is supported in an openable and closable manner by a pair of upper and lower door hinge members 43a, 43b disposed at a front pillar 3 forming the front edge portion of the front door opening 1a, while the rear door 42 is supported in an openable and closable manner by a pair of upper and lower door hinge members 44a, 44b disposed at a center pillar 4 forming the rear edge portion of the front door opening 1a and the front edge portion of the rear door opening 1b.

The front door 2 is structured to have a door body 15 composed of a door outer 15a and a door inner 15b, which are coupled by hemming, and a window frame 16 connected thereto, and in the door body 15, a door glass 16a opening and closing a window opening of the window flame 16 is accommodated and disposed in a hoistable and lowerable manner. Also, the rear door 42 is structured to have a door body 45 composed of a door outer 45a and a door inner 45b, which are coupled, and a window flame (not shown) connected thereto.

In the door body 15 of the front door 2, there is disposed a beltline reinforcement 20 in accordance with a beltline portion L. The beltline reinforcement 20 is structured to have an outer reinforcement 21 and an inner reinforcement 22 having approximately a half vertical length of the outer reinforcement 21 that are coupled with each other by welding to form a box-shaped closed section, and is jointed with the door inner 15b by welding. Further, front end portions 21a, 22a of the outer reinforcement 21 and the inner reinforcement 22 are formed to be tabular and jointed with each other while abutting on each other.

The front pillar 3 is structured to have a pillar outer 5 having almost a hat-shaped transverse section and a pillar inner 6, and a pillar reinforcement 8 formed therebetween and having a hat-shaped transverse section to go substantially along the pillar outer 5, of these front and rear edge portions 3a, 3b are jointed with each other by spot welding, so that a closed section in the rectangular column shape extending in the vertical direction is formed.

On an outer wall 3c of the front pillar 3, an apron member 9 of a band-plate shape extending frontward is coupled at its rear end portion 9a by welding. When viewing from the vehicle side, the apron member 9 and the beltline reinforcement 20 are substantially at the same height such that they form substantially a straight line in the vehicle longitudinal direction. With this, an inputted force at the time of the vehicle crash is designed to be transmitted from the apron member 9 to the beltline reinforcement 20 via the front pillar 3 efficiently.

Further, at a front flange portion 6a of the pillar inner 6, the side end portion of a windshield panel 46 extending in the vehicle lateral direction, and a rear flange portion 47a of an upper member 47 are jointed by welding.

When viewing in the vehicle longitudinal direction, the front vertical wall 15c of the door inner 15b of the front door 2 is disposed such that substantially a half thereof at the vehicle inner side overlaps an outer side of a rear side wall 3d of the front pillar 3.

Further, at the inside corner portion of the front vertical wall 15c of the door inner 15b, a bulge 15e swelling to the front pillar 3 side is formed. An outer reinforcement 21 of the beltline reinforcement 20 is formed to extend to position in the bulge 15e with its tip portion, so that an engagement at the time of the vehicle crash can be performed quickly. The tip portion of the outer reinforcement 21 has a planar shape, and abuts on and jointed with the door inner 15b.

In the front pillar 3, there is formed a bulkhead 48 at the joint portion of the front pillar 3 with the apron member 9. The bulkhead 48 has substantially a box shape having a box-shaped closed section, and prevents the section of the front pillar 3 from being broken at the time of the vehicle crash, thereby the inputted force is effectively transmitted from the apron member 9 to the front pillar 3, and to the beltline reinforcement 20.

At the rear end portion of the bulkhead 48 that approaches the front end surface 20a of the beltline reinforcement 20, there is formed a concave portion 48a by being cut out. Also, at the portion of the pillar inner reinforcement 8 that approaches the front end surface 20a of the beltline reinforcement 20, there is formed a release hole 8a of a size allowing the beltline reinforcement 20 to be inserted therethrough. With such a structure, the front pillar 3 can bump into and squash the beltline reinforcement 20 more surely.

The upper hinge member 43a is structured to have a pillar-side hinge portion 30 disposed at the outer wall 3c of the front pillar 3 and a door-side hinge portion 31 disposed at the front vertical wall 15d of the door inner 15a of the front door 2, which are coupled in a rotatable manner by a hinge pin 32. Also, the lower hinge member 43b has the same structure.

The pillar-side hinge portion 30 is fastened and secured to the outer wall of the pillar outer 5 together with the pillar inner reinforcement 8 by a pair of upper and lower bolts 33.

The door-side hinge portion 31 is disposed so as to position between the apron member 9 and the beltline reinforcement 20, and is fastened and secured to the front vertical wall 15d of the door inner 15b together with a reinforcing board 35 made from a sheet metal and disposed inside the front vertical wall 15d, by a pair of upper and lower bolts 34.

The reinforcing board 35 has a fastening portion 35a, to which the door-side hinge portion 31 is to be secured, and an extension 35b extending continuously from the fastening portion 35a inward in the vehicle lateral direction, in which the extension 35b extends along the front vertical wall 15d to come close to the front end surface 20a of the beltline reinforcement 20 and is jointed with the front vertical wall 15d by spot welding. Note that the reinforcing board 35 may be alternatively extended further to be jointed with the front end surface 20a of the beltline reinforcement.

The rear end portion of the door inner 15b has a first rear vertical wall 15c extending from the joint portion with the door outer 15a to the vehicle inner side by being bent, a side wall 15f extending from the inside end of the first rear vertical wall 15c frontward by being bent, and a second rear vertical wall 15g extending from the front end of the side wall 15f to the vehicle inner side by being bent, in which the inside end portion of the second rear vertical wall 15g faces the rear end surface 20b of the beltline reinforcement 20 closely.

The center pillar 4 includes, a pillar outer 50 having a hat-shaped section, a pillar inner 51, and a pillar outer reinforcement 52 having a hat-shaped section formed therebetween almost along with the pillar outer 50, in which the front edge portions 4a and the rear edge portions 4b of these are overlapped and coupled with each other by spot welding, so that the center pillar 4 is structured to have a closed section formed in the rectangular column shape extending in the vertical direction. Further, inside the pillar outer reinforcement 52, there is disposed a pillar inner reinforcement 53 having a horseshoe shape and formed almost along therewith.

On an outer wall 50a of the pillar outer 50, the door hinge members 44a, 44b are mounted. The door hinge members 44a, 44b are structured such that a pillar-side hinge portion 55 mounted and secured to the outer wall 50a and a door-side hinge portion 56 mounted and secured to a front vertical wall 45c of the door inner 45b of the rear door 42 are coupled by a hinge pin 57 in a pivotal manner.

The second rear vertical wall 15g of the door inner 15b faces a front side wall 50b of the pillar outer 50 with a predetermined space "c" therebetween, in which the space "c" is set to have approximately several mm. By reducing the space "c", the inputted force at the time of the vehicle crash is designed to be transmitted from the beltline reinforcement 20 into the center pillar 4 quickly.

Between the pillar outer 50 and the pillar outer reinforcement 52, a patch member 58 made from a sheet metal is disposed. The patch member 58 includes an outer wall portion 58a to abut to an outer wall 52a of the pillar outer reinforcement 52 and a front wall portion 58b to abut to a front side wall 52b of the pillar outer reinforcement 52, and the vertical size of the patch member 58 is slightly larger than the vertical size of the pillar-side hinge portion 55 on the upper side.

The front wall portion 58b of the patch member 58 is abutted to substantially the entire length of the front side wall 52b of the pillar outer reinforcement 52, and the front side wall 52b and the front wall portion 58b are abutted by spot welding. Backed by this, the front wall portion 58b functions as a reinforcing member of the pillar outer reinforcement 52, thereby the beltline reinforcement 20 can be prevented from squashing the pillar outer reinforcement 52 when the beltline reinforcement 20 is moved rearward and bumps thereinto, so that the door can be opened by springback after the vehicle crash.

At the corner portion of the patch member 58 between the front wall portions 58b and the outer wall portion 58a, a bulge 58c swelling to the front door side is formed. Note that a space corresponding to the protrusion of the bulge 58c is provided between the front side wall 50b of the pillar outer 50 and the front side wall 52b of the pillar outer reinforcement 52

The bulge 58c is formed disproportionately to the vehicle outer side from the beltline reinforcement 20, thereby the beltline reinforcement 20 is designed to engage with the bulge 58c when the front door 2 is moved rearward at the time of the vehicle crash.

The outer wall portion 58a of the patch member 58 together with the pillar-side hinge portion 55 of the door hinge member 44a is overlapped over the pillar outer 50, the pillar outer reinforcement 52, and the pillar inner reinforcement 53, and secured all together by a pair of upper and lower bolts 49, 49.

Further, the rear end lower portion of the beltline reinforcement 20 is formed to extend downwardly, and an extension 20b' thereof slightly protrudes rearward from an upper portion 20b thereof (refer to FIG. 11). Backed by this, a load is designed to be transmitted after the extension 20b' bumps into the center pillar 4 first. The patch member 58 and the door hinge member 44a position to face the rear side of the extension 20b'.

Subsequently, an operation and effect of the present embodiment will be described.

According to the structure of the beltline section of the present embodiment, the door-side hinge portion 31 of the door hinge member 43a is secured to the front vertical wall 15d of the door inner 15b by a bolt together with the reinforcing board 35, the extension 35b approaching the beltline reinforcement 20 is formed along the front vertical wall 15d to the reinforcing board 35, and the extension 35b is jointed with the front vertical wall 15d by welding, thereby the fastened portion of the hinges at the front vertical wall 15d can be improved in rigidity, so that the door inner 15b can be prevented from being deformed in case of a vehicle crash. As a result, the door-side hinge portion 31 can be prevented from rotating to the vehicle outer side, and thereby the door body 15 can be prevented from moving to the vehicle outer side, so that the impact force can surely be transmitted from the front pillar 3 to the beltline reinforcement 20.

According to the structure of the beltline section of the present embodiment, the patch member 58 is disposed between the pillar outer 50 and the pillar outer reinforcement 52 of the center pillar 4, and the bulge 58c swelling to the front door side is formed at the corner between the front wall portion 58b and the pillar outer reinforcement 52 of the center pillar 4, hence, when the front door 2 is moved rearward due to a vehicle crash, then the beltline reinforcement 20 engages with the inside surface of the bulge 58c, so that the front door 2 is prevented from moving to the vehicle outer side and the impact force is transmitted to the center pillar 4.

In the present embodiment, the outer wall portion 58a of the patch member 58 together with the pillar-side hinge portion 55 of the door hinge member 44a is overlapped over the pillar outer 50, the pillar outer reinforcement 52, and the pillar inner reinforcement 53, and secured all together by the pair of upper and lower bolts 49, 49, so that the coupling strength of the patch member 58 in the vehicle lateral direction can be increased larger as compared to that by spot welding. As a result, the deformation due to the removal of the patch member 58 to the vehicle outer side can be prevented, so that the impact force can surely be transmitted into the center pillar 4.

Further, the patch member 58 can be improved in coupling strength in the vehicle lateral direction, thereby the beltline reinforcement 20 can surely bump into and squash the center pillar 4 in the case of a vehicle that cannot afford a certain section width in the vehicle lateral direction for the center pillar 4, so that the impact force can be transmitted into the center pillar 4 efficiently.

Further, the patch member 58 is secured to the center pillar 4 by a bolt, so that places of spot welding in the outer wall portion 58c of the patch member 58 can be reduced.

In the present embodiment, the rear end lower portion of the beltline reinforcement 20 is formed to extend downward, and the extension 20b' is made to face the patch member 58 and the door hinge member 44a, hence, even in the case of a vehicle that cannot afford a certain section width at the height of the beltline portion L for the center pillar 4, the beltline reinforcement 20 can surely bump into and squash the patch 58, so that the impact force can be transmitted into the center pillar 4 effectively.

### Industrial Availability

According to the structure of the beltline section related to the invention in claim 1, the bulge protruding to the pillar side and the vehicle inner side is formed at the vehicle inner side corner of the door-side vertical wall of the door body, enabling to increase the lapping amount between the pillar member and the beltline reinforcement owing to the bulge at the vehicle inner side, so that the beltline reinforcement surely bumps into and squashes the pillar member even when the pillar member is deformed by torsion. At a result, the door body can be prevented from being pushed out to the vehicle outer side, and the impact force can be transmitted from the beltline reinforcement into the vehicle rear body surely.

Further, the bulge at vehicle inner side serves as a bead for crash by being deformed due to buckling when the vehicle crashes, thereby the beltline reinforcement quickly bumps into and squashes in the pillar member, so that the impact force can be transmitted into the vehicle rear body.

With the bulge at the pillar side, the space between the bulge and the pillar member can be reduced, thereby the time necessary for the beltline reinforcement to bump into and squash the pillar member can be reduced to that extent, so that the door body can be prevented from moving to the vehicle outer side even if the pillar member is deformed by torsion.

Further, in the present invention, the bulges at the pillar side and the vehicle inner side are formed at the vehicle inner side corner of the door-side vertical wall, thereby the space in which the sealant is disposed can be ensured and also the door body can be prevented from protruding to the vehicle inner side, so that the vehicle interior space can be ensured.

In the present invention, the front end portion of the beltline reinforcement is disposed by being inserted into the bulge at the pillar side, thereby the distance between the beltline reinforcement and the pillar member can be reduced further, so that the time necessary for the beltline reinforcement to bump into and squash the pillar member can be reduced further.

In the invention in claim 3, the beltline reinforcement is formed by jointing the outer reinforcement and the inner reinforcement by welding, in which the front end of the inner reinforcement is set to protrude from the front end of the outer reinforcement, thereby the inner reinforcement having a larger lapping margin in the vehicle lateral direction with respect to the pillar member is forced to bump into the pillar member faster than the outer reinforcement, that is, the beltline reinforcement surely bumps into and squash the pillar member even if the pillar member is deformed by torsion, so that the door body can be prevented from moving to the vehicle outer side.

In the invention in claim 4, the bulge protruding to the pillar side and the vehicle inner side is formed at the vehicle inner side corner and the front end of the inner reinforcement of the beltline reinforcement is set to protrude from the front end of the outer reinforcement, thereby the beltline reinforcement can bump into and squash the pillar member more quickly and surely, so that the door body can be prevented from moving into the vehicle outer side surely and the impact force can be transmitted from the beltline reinforcement into the vehicle rear body effectively.

According to the structure of the beltline section related to the invention in claim 5, the door-side hinge portion is secured to the front vertical wall of the door body by having the reinforcing board between the door-side hinge portion and the vertical wall, and the reinforcing board is formed at the vehicle inner side along the front vertical wall to extend to come close to the beltline reinforcement, so that the rigidity at the portion to mount the hinge can be increased, and the deformation of the front vertical wall at the time of the vehicle clash can be prevented. As a result, the door-side hinge portion can be prevented from rotating to the vehicle outer side, hence the door body can be prevented from moving to the vehicle outer side, so that the impact force can surely be transmitted into the beltline reinforcement.

According to the structure of the beltline section related to the invention in claim 6, the end surface protrusion coming close to the pillar side is formed on the end surface of the beltline reinforcement facing the portion of the pillar member having the wider section width, so that the end surface protrusion bumps into the wider section width portion of the pillar member first, hence it is possible to ensure the lapping margin in the vehicle lateral direction with respect to the pillar member, so that the beltline reinforcement can surely bump into and squash the pillar member, even if the pillar member is deformed by torsion. As a result, the front door can be prevented from being pushed out to the vehicle outer side, and thereby the impact force can surely be transmitted from the beltline reinforcement into the vehicle rear body.

In the invention in claim 7, the end surface protrusion is formed disproportionately upward or downward from the beltline, so that the impact force can be transmitted from the beltline portion into the end surface protrusion even if the wider section width of the pillar member deviates from the beltline portion, so that the beltline reinforcement can bump into and squash the pillar member surely.

In the invention in claim 8, the flange portion extending in the vehicle lateral direction is provided at the portion opposed to the end surface protrusion of the beltline reinforcement, thereby the end surface protrusion can be improved in rigidity, so that the beltline reinforcement can bump into and squash the center pillar more surely. In the case, for example, when the end surface protrusion is formed disproportionately upward or downward from the beltline portion, the rigidity at the disproportionately-formed portion may sometimes be insufficient, or otherwise in the case where the end surface protrusion cannot be jointed by welding with the door body due to the positional relation with the door sash, there arises a concern that the pillar member is bumped into and squashed insufficiently, whereas even in such cases, the provision of the flange portion can increase the flexural rigidity, so that the pillar member can surely be bumped into and squashed.

According to the structure of the beltline section related to the invention in claim 9, the patch member is disposed between the pillar outer and the pillar reinforcement of the center pillar, and the bulge being engaged with the beltline reinforcement when the vehicle clashes is formed at the front wall portion the patch member, so that the front door can be prevented from moving to the vehicle outer side at the time of the vehicle clash and the impact force can be transmitted to the center pillar surely.

Then, the patch member together with the door hinge member is secured all together by the bolt to the pillar reinforcement and the pillar outer, so that the coupling strength of the patch member in the vehicle lateral direction can be increased larger as compared to that by spot welding. As a result, the deformation due to the removal of the patch member to the vehicle outer side can be prevented, so that the impact force can be transmitted into the center pillar surely.

Further, the patch member can be improved in coupling strength in the vehicle lateral direction, thereby the beltline reinforcement can surely bump into and squash the center pillar in the case of a vehicle that cannot afford a certain section width in the vehicle lateral direction for the center pillar, so that the impact force can be transmitted into the center pillar efficiently.

In the invention in claim 10, the rear end lower portion of the beltline reinforcement is formed to extend downward, and the extension is made to face the patch member and the door hinge member, hence, even in the case of a vehicle that cannot afford a certain section width for the center pillar, the beltline reinforcement can surely bump into the patch, so that the impact force can be transmitted into the center pillar more effectively.

## Claims

1. A structure of a vehicle beltline section comprising, a pillar member extending in a vehicle vertical direction; a door body whose door-side vertical wall facing said pillar member is disposed to overlap such a pillar-side vertical wall of said pillar member that faces said door body when viewing from a vehicle longitudinal direction; and a beltline reinforcement disposed in said door body to face the pillar-side vertical wall, wherein a bulge protruding to a pillar side and a vehicle inner side is formed at a vehicle inner side corner of the door-side vertical wall of said door body.

2. The structure of the vehicle beltline section according to claim 1, wherein a tip portion of said beltline reinforcement is inserted into and disposed in said bulge at the pillar side.

3. A structure of a vehicle beltline section comprising, a pillar member extending in a vehicle vertical direction; a door body whose door-side vertical wall facing said pillar member is disposed to overlap such a pillar-side vertical wall of said pillar member that faces said door body when viewing from a vehicle longitudinal direction; and a beltline reinforcement disposed in said door body to face the pillar-side vertical wall, wherein said beltline reinforcement is formed by jointing an outer reinforcement and an inner reinforcement, and wherein a tip of said inner reinforcement protrudes to the pillar side from a tip of said outer reinforcement.

4. A structure of a vehicle beltline section comprising, a pillar member extending in a vehicle vertical direction; a door body whose door-side vertical wall facing said pillar member is disposed to overlap such a pillar-side vertical wall of said pillar member that faces said door body when viewing from a vehicle longitudinal direction; and a beltline reinforcement disposed in said door body to face the pillar-side vertical wall, wherein a bulge protruding to a pillar side and a vehicle inner side is formed at a vehicle inner side corner of the door-side vertical wall of said door body, and wherein said beltline reinforcement is formed by jointing an outer reinforcement and an inner reinforcement by welding, and wherein a tip of said inner reinforcement protrudes to the pillar side from a tip of said outer reinforcement.

5. A structure of a vehicle beltline section comprising, a pillar member extending in a vehicle vertical direction; a door member whose front vertical wall is disposed such that a vehicle inner portion of the front vertical wall overlaps a rear side wall of said pillar member when viewing from a vehicle longitudinal direction; a beltline reinforcement disposed in said door body to face the rear side wall; a pillar-side hinge portion secured to an outer side wall of said pillar member; and a door-side hinge portion secured to the front vertical wall of said door body and coupled with said pillar-side hinge portion via a hinge pin in a rotatable manner, wherein said door-side hinge portion is secured to the front vertical wall by having a reinforcing board between said door-side hinge portion and the front vertical wall, and wherein said reinforcing board is formed to extend along the front vertical wall to a vehicle inner side to come close to said beltline reinforcement.

6. A structure of a vehicle beltline section comprising,
front and rear pillar members; a door body disposed between said front pillar member and said rear pillar member; a beltline reinforcement extending along a beltline in a vehicle longitudinal direction and disposed in said door body such that a font end portion of said beltline reinforcement faces said front pillar member and a rear end portion of said beltline reinforcement faces said rear pillar member, wherein an end surface protrusion protruding from other end surface portion to come closer to a pillar side is formed on such an end surface of said beltline reinforcement that faces a portion of said pillar member having a section width wider than the section width of other portions of the pillar member.

7. The structure of the vehicle beltline section according to claim 6, wherein said end surface protrusion coming close to the pillar side is formed disproportionately upward or downward from the belt line.

8. The structure of the vehicle beltline section according to claim 6 or claim 7, wherein a flange
portion extended in a vehicle lateral direction is provided at a portion of said beltline reinforcement opposed to the end surface protrusion of said beltline reinforcement.

9. A structure of a vehicle beltline section comprising,
a front door, a beltline reinforcement extending in a vehicle longitudinal direction and disposed in said front door; a center pillar disposed at a rear of said front door to face a rear end surface of said beltline reinforcement; and
a door hinge member of a rear door is disposed on an outer wall of a pillar outer of said center pillar, wherein a pillar reinforcement formed to be in accordance with the pillar outer is disposed inside the pillar outer, wherein a patch member having at least a front wall portion and an outer wall portion is disposed between said pillar reinforcement and the pillar outer, wherein a bulge preventing a door body from moving to a vehicle outer side at a time a vehicle clash by being engaged with said beltline reinforcement is formed on a front wall portion of said patch member, and wherein the outer wall portion together with said door hinge member is secured to said pillar reinforcement and the pillar outer by bolting all together.

10. The structure of the vehicle beltline section according to claim 9, wherein a rear end lower portion of said beltline reinforcement is formed to extend downward and the extension is made to face said patch member and said door hinge member.
